Europäisches Patentamt

**European Patent Office**

Office européen des brevets

(19)

(11) Numéro de publication: **0 027 755**
**B1**

(12)

# FASCICULE DE BREVET EUROPEEN

(45) Date de publication du fascicule du brevet:
**25.01.84**

(51) Int. Cl.³: **G 02 F 1/17**

(21) Numéro de dépôt: **80401406.6**

(22) Date de dépôt: **03.10.80**

(54) **Cellule d'affichage électrolytique comprenant un électrolyte à deux sels métalliques qui augmentent la durée de mémorisation.**

(30) Priorité: **17.10.79 FR 7925788**

(43) Date de publication de la demande:
**29.04.81 Bulletin 81/17**

(45) Mention de la délivrance du brevet:
**25.01.84 Bulletin 84/4**

(84) Etats contractants désignés:
**AT CH DE FR GB IT LI NL SE**

(56) Documents cités:
**FR - A - 2 260 167**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Meyer, Robert, Chemin Baratière, F-38330 Saint Nazaire Les Eymes (FR)**

(74) Mandataire: **Mongrédien, André et al, c/o BREVATOME 25, rue de Ponthieu, F-75008 Paris (FR)**

## Cellule d'affichage électrolytique comprenant un électrolyte à deux sels métalliques qui augmentent la durée de mémorisation

La présente invention a pour objet une cellule d'affichage électrolytique et un procédé pour augmenter la durée de mémorisation de l'affichage. Elle trouve une application en optoélectronique et notamment dans l'affichage de caractères alphanumériques.

Une cellule d'affichage électrolytique comprend, très schématiquement, un électrolyte contenant un sel métallique, inséré entre une électrode de forme appropriée et une contre-électrode, toutes deux reliées à une source de tension apte à porter l'électrode à un potentiel déterminé pour y provoquer soit le dépôt par réduction électrochimique d'une couche de métal (phase d'affichage), soit la redissolution de cette couche par oxydation électrochimique (phase d'effaçage).

L'un des problèmes majeurs posés par ce genre de dispositifs est celui de la durée de vie de la cellule. La condition d'obtention d'une durée élevée est une grande stabilité des substances en présence.

La stabilité de l'électrolyte peut être obtenue en utilisant un solvant organique et un sel qui est tel que les réactions secondaires qui peuvent apparaître en fin de dissolution, présentent un caractère réversible, de sorte que le produit engendré par ces réactions secondaires se redécompose en ses composants initiaux; la composition de l'électrolyte reste alors pratiquement inchangée. Le sel est en général un halogénure métallique, notamment le bromure ou l'iodure d'argent.

Il subsiste encore une difficulté liée à la durée du phénomène de mémorisation des signes affichés. Avec les électrolytes du type indiqué (à iodure d'argent par exemple), il est possible d'obtenir une durée de mémorisation d'environ 10 minutes, mais un problème se pose quant au maintien de cette durée au fil des cycles de «rafraîchissement» de l'affichage.

On sait qu'il s'agit là d'une opération d'effacement et de réécriture, effectuée de la manière la plus rapide possible, de façon à régénérer le contraste de l'affichage. L'intervalle de temps entre deux rafraîchissements dépend de l'aptitude de la cellule à mémoriser l'affichage après cessation de l'excitation. Il s'allonge lorsque la durée de mémorisation augmente. Un intervalle de 10 minutes semble constituer un minimum dans les applications à l'horlogerie, afin que la consommation électrique reste limitée.

Pour mieux comprendre les difficultés qui peuvent apparaître au moment d'une telle opération de rafraîchissement, il est nécessaire de décrire brièvement les phénomènes qui entraînent la dégradation de la mémorisation. Ces phénomènes sont de deux types différents selon qu'ils concernent un excès d'effacement ou une instabilité de la structure du film métallique:

— lors d'un excès d'effacement, il y a formation d'une quantité importante d'halogène (d'iode par exemple) au voisinage d'un segment effacé; si celui-ci est réécrit aussitôt après, l'halogène qui n'a pas eu le temps de diffuser, dissout une partie de l'argent que l'on vient de déposer, d'où un affaiblissement du contraste;

— la décroissance des propriétés optiques du film d'argent (et notamment de son absorption) est liée à une évolution de la structure de ce film pendant la durée de mémorisation; la structure qui, au départ, était microcristalline et très absorbante, pour des conditions de dépôt optimales, évolue vers une forme filamentaire de moins en moins absorbante. Le contraste tend alors progressivement vers zéro. En outre, pour une surface filamentaire, pendant la dissolution des derniers filaments d'argent, de l'iode se forme simultanément sur le reste de la surface du film. La quantité d'iode formée est donc plus importante que dans le cas où la structure est microcristalline. Enfin, si un effacement a été insuffisant, la couche métallique évolue plus vite au cycle d'écriture suivant car les grains d'argent non dissous servent de germes à la recristallisation: la mémoire devient de plus en plus mauvaise.

En définitive, un fonctionnement satisfaisant ne peut être obtenu que si l'on peut redissoudre parfaitement le film d'argent sans que la quantité d'iode formée soit trop importante. Pour cela, il faut que la structure du film ait suffisamment peu évolué, autrement dit qu'elle soit stable.

La présente invention permet de résoudre ce problème. A cette fin, l'invention prévoit l'adjonction dans l'électrolyte d'un second sel métallique, le métal de ce second sel étant apte à se déposer en même temps que le métal du premier sel lors de la phase d'affichage. La couche métallique déposée comprend alors les deux métaux et, de façon surprenante, cette couche est plus stable que la couche obtenue avec un seul métal et la durée de mémorisation est augmentée.

L'utilisation de deux métaux différents est déjà connue dans les dispositifs d'affichage, comme décrit dans le document FR-A-2 260 167. Mais, dans ce cas, il s'agit de dispositifs à électrolyte solide pour lesquels des phénomènes de limitation de durée de vie soulignés plus haut sont totalement différents de ce qu'ils sont pour les cellules à électrolyte liquide et pour lesquels les métaux utilisés ne sont pas employés par le biais de sels différents mais dans une même composition de stoechiométrie déterminée.

De façon plus précise, la présente invention a pour objet une cellule d'affichage électrolytique comprenant, entre une électrode de forme appropriée et une contreélectrode, un électrolyte liquide comprenant un premier sel métallique donnant des ions d'un premier métal, ce métal ayant, pour le degré d'oxydation de ses ions correspondant aux conditions de fonctionnement de la cellule un potentiel d'oxydoréduction donné, caractérisée en ce que è'électrolyte liquide comprend un second sel métallique donnant des ions d'un second métal, ce second métal ayant, pour le degré d'oxydation de ses ions correspondant auxdites conditions de fonctionnement, un potentiel d'oxydoréduction voisin de celui du premier métal comme est voisin le potentiel d'oxydoréduction de $Cu^{2+}$ ou de $Au^{3+}$ de celui de $Ag^+$.

De préférence, le premier métal est l'argent. Deux métaux présentent des potentiels d'oxydoréduction relativement voisins de celui de l'argent et sont donc

susceptibles de se déposer avec lui; ce sont l'or et le cuivre:

— l'or a un potentiel d'oxydoréduction supérieur à celui de l'argent; il se déposera donc plus facilement et se dissoudra plus difficilement que ce dernier. Au cours d'une impulsion d'effacement, se déposeront donc de l'or et de l'argent sur la contre-électrode. A l'impulsion d'écriture suivante, l'argent se redissoudra plus facilement puisque ce métal possède un potentiel d'oxydoréduction inférieur à celui de l'or et qu'il y en a une réserve importante; on pourrait donc craindre que l'or disparaisse peu à peu de l'électrolyte et s'accumule sur la contre-électrode. En réalité, ce phénomène disparaît très vite. Aussitôt après le remplissage de la cellule il y a déplacement chimique d'une fraction de l'argent de la contre-électrode par une partie de l'or contenu dans l'électrolyte:

$$Au^{3+} + 3Ag \rightarrow Au + 3Ag^+$$

Une fois que la contre-électrode est recouverte d'un film mince d'or, l'état d'équilibre est obtenu et le fonctionnement de l'afficheur reste stable;

— le cuivre possède un potentiel d'oxydoréduction inférieur à celui de l'argent; il se déposera donc plus difficilement mais se dissoudra plus facilement que ce dernier. La surtension nécessaire à la nucléation des premières couches d'argent permettra, malgré tout, le dépôt simultané de cuivre pendant la phase d'écriture. Le cuivre étant par ailleurs, plus facile à dissoudre que l'argent, il ne s'accumulera pas sur la contre-électrode et la composition de l'électrolyte restera stable.

A titre d'exemples, on peut utiliser, conformément à l'invention, un électrolyte ayant l'une des deux compositions suivantes:

| 1er sel | Ag I: | 10 | g/l | Ag I: | 40 | g/l |
|---------|-------|-----|-----|-------|-----|-----|
| 2ème sel | Cul ou CuBr$_2$ | 2,5 | g/l | Au I$_3$: | 2,5 | g/l |
| | Na I: | 180 | g/l | Na I: | 180 | g/l |
| alcool méthylique | | 67% | | | | |
| acétonitrile | | 33% | | | | |

Ce nouvel électrolyte permet d'augmenter la durée de mémorisation des cellules d'affichage électrolytique dans un rapport 2. L'effacement après 10 minutes de mémorisation s'obtient sans que la formation d'iode n'affecte le contraste lors de la réécriture suivante.

L'invention qui vient d'être décrite s'applique de préférence aux cellules d'affichage électrolytique utilisant un dépôt métallique absorbant, comme celle qui fait l'objet de la demande de brevet français n° 76/15103 déposée le 19 mai 1976 au nom du demandeur. Mais elle s'applique également aux cellules à dépôt métallique réfléchissant, lesquelles sont décrites dans de nombreux documents et notamment dans le brevet français 1 228 105 du 3 février 1959, les brevets américains 3 245 313 du 12 avril 1966 et 3 626 410 du 7 décembre 1971, et dans la demande de brevet français 2 131 993 du 29 février 1972.

## Revendications

1. Cellule d'affichage électrolytique comprenant, entre une électrode de forme appropriée et une contreélectrode, un électrolyte liquide comprenant un premier sel métallique donnant des ions d'un premier métal, ce métal ayant, pour le degré d'oxydation des ions correspondant aux conditions de fonctionnement de la cellule, un potentiel d'oxydoréduction donné, caractérisée en ce que l'électrolyte liquide comprend un second sel métallique donnant des ions d'un second métal, ce second métal ayant, pour le degré d'oxydation de ses ions correspondant auxdites conditions de fonctionnement, un potentiel d'oxydoréduction voisin de celui du premier métal comme est voisin le potentiel d'oxydoréduction de $Cu^{2+}$ ou de $Au^{3+}$ de celui de $Ag^+$.

2. Cellule d'affichage électrolytique selon la revendication 1, caractérisée en ce que le premier métal est l'argent.

3. Cellule d'affichage électrolytique selon la revendication 2, caractérisée en ce que le second métal est le cuivre.

4. Cellule d'affichage électrolytique selon la revendication 2, caractérisée en ce que le second métal est l'or.

5. Cellule d'affichage électrolytique selon l'une quelconque des revendications 1 à 4, caractérisée en ce que la couche métallique déposée sur une des électrodes en cours d'affichage est une couche mince absorbante de la lumière.

## Patentansprüche

1. Elektrolytische Anzeigezelle mit einem flüssigen Elektrolyten zwischen einer Elektrode einer geeigneten Form und einer Gegenelektrode, der ein erstes Metallsalz enthält, das Ionen eines ersten Metalls liefert, das für den den Arbeitsbedingungen der Zelle entsprechenden Grad der Oxidation der Ionen ein gegebenes Redoxpotential hat, dadurch gekennzeichnet, dass der flüssige Elektrolyt ein zweites Metallsalz enthält, das Ionen eines zweiten Metalls liefert, das für den den Arbeitsbedingungen entsprechenden Grad der Oxidation seiner Ionen ein Redoxpotential hat, das in der Nähe desjenigen des ersten Metalls liegt, so wie das Redoxpotential von $Cu^{2+}$ oder von $Au^{3+}$ in der Nähe desjenigen von $Ag^+$ liegt.

2. Elektrolytische Anzeigezelle nach Anspruch 1, dadurch gekennzeichnet, dass es sich bei dem ersten Metall um Silber handelt.

· 3. Elektrolytische Anzeigezelle nach Anspruch 2, dadurch gekennzeichnet, dass es sich bei dem zweiten Metall um Kupfer handelt.

4. Elektrolytische Anzeigezelle nach Anspruch 2, dadurch gekennzeichnet, dass es sich bei dem zweiten Metall um Gold handelt.

5. Elektrolytische Anzeigezelle nach einem der Ansprüche 1 bis 4, dadurch gekennzeichnet, dass es sich bei der im Verlaufe der Anzeige auf einer der Elektroden abgeschiedenen Metallschicht um eine dünne, Licht absorbierende Schicht handelt.

## Claims

1. Electrolytic display cell comprising, between an appropriately shaped electrode and a counterelectrode, a liquid electrolyte comprising a first metal salt providing ions of a first metal, said metal having a given redox potential for the degree of oxidation of ions corresponding to the conditions for operation of the cell, characterized in that the liquid electrolyte comprises a second metal salt providing ions of a second metal, said second metal having, for the degree of oxidation of its ions corresponding to the said conditions for operation, a redox potential close to that of the first metal as the redox potential for $Cu^{2+}$ or $Au^{3+}$ is close to that of $Ag^{+}$.

2. Electrolytic display cell according to claim 1, characterized in that the first metal is silver.

3. Electrolytic display cell according to claim 2, characterized in that the second metal is copper.

4. Electrolytic display cell according to claim 2, characterized in that the second metal is gold.

5. Electrolytic display cell according to any one of claims 1 to 4, characterized in that the metal layer deposited on one of the electrodes during display is a thin light-absorbing layer.